# EUROPÄISCHE PATENTANMELDUNG

(11) **EP 1 016 668 A2**
(43) Veröffentlichungstag der Anmeldung: **05.07.2000**
(21) Anmeldenummer: 99124798.2
(22) Anmeldetag: 14.12.1999
(51) Int. Cl.: C07F 7/18, C07F 7/08

(54) **Verfahren zur Herstellung von Silylalkylthiolen**

(30) Priorität: 28.12.1998 DE 19860439
(71) Anmelder: Degussa-Hüls Aktiengesellschaft, 60287 Frankfurt am Main (DE)
(72) Erfinder: Batz-Sohn, Christoph, Dr., 63452 Hanau (DE)

(57) **Zusammenfassung**

Silylalkylthiole werden hergestellt, indem man Silylalkylsulfanylsilane mit Wasser umsetzt. Die Silylalkylsulfanylsilane können durch Umsetzung von Bis-silylalkylpolysulfanen beziehungsweise Bis-silylalkyldisulfane mit Alkalimetall und Chlorsilanen hergestellt werden.

## Beschreibung

Die Erfindung betrift ein Verfahren zur Herstellung von Silylalkylthiolen.

Es ist bekannt, daß organische Sulfanylsilane empfindlich gegenüber der Hydrolyse ihrer Schwefel-Silicium-Bindung sind (A. Haas, *Angew. Chem. Intern. Ed. Engl*., **1965**, *14*, 1014; R. Danieli, A. Ricci, *J. Chem. Soc. Perkin II*, **1972,** *2*, 1471).

Weiterhin ist bekannt, daß sich einfache organische Sulfanyltrimethylsilane durch die Reaktion der entsprechenden Disulfane mit elementarem Natrium und Chlortrimethylsilan in Ausbeuten von 55%-95% darstellen lassen (I. Kuwajima, T. Abe, *Bull. Chem. Soc. Jap.*, **1978,** *51*, 2183-2184).

Weiterhin sind Silylalkylsulfanylsilane bekannt aus DB 198 44 607.

Weiterhin ist bekannt, daß Mercaptosilane in einer Einschrittreaktion durch Umsetzung für diese Reaktion geeigneter Halogenorganylsilan-Verbindungen mit Thioharnstoff und Ammoniak hergestellt werden können (DE-AS 20 35 619/USPS 3 590 065). Diese Methode hat den Nachteil, daß zur Erzielung wirtschaftlich akzeptabler Umsatzraten lange Chargenzeiten von mehr als 24 Stunden benötigt werden. Ausbeuten sind schwankend und erreichen nur Werte zwischen 75 und 80 %, bezogen auf den Umsatz an eingesetzter Halogenorganylsilan-Verbindung. Weiterhin ist diese Verfahrensweise mit einem Zwangsanfall an Guanidin-Hydrochlorid belastet, dessen Abtrennung zusätzlichen Aufwand erforderlich macht. Weitere Versuche sind unternommen worden, diese prinzipielle Verfahrensweise weiter zu verbessern (US-PS 4 401 826). Bezüglich der Ausbeute und der anzuwendenden Reaktionstemperaturen ergaben sich jedoch keine Verbesserungen.

Weiterhin ist bekannt, daß Verfahren zur Herstellung von Mercaptosilanen durch Umsetzung der entsprechenden Thioacetosilan-Verbindungen mit Alkoholen wegen niedriger Ausbeuten und begrenzter Anwendbarkeit dieser Methode keine technische Bedeutung erlangt haben (US-PS 3 632 826, 3 565 937, 3 565 935, DE-AS 20 38 715).

Weiterhin bekannt sind Verfahren zur Herstellung von Mercaptosilanen, die von zum Beispiel Thiopropionsäureamid-Silanen ausgehen und durch Druckhydrierung die Überführung in die entsprechenden Mereaptosilane vornehmen. Die Ausbeuten sind unbefriedigend (EP-PS 0 018 094).

Bekannt sind weiterhin Versuche, Cyanoalkylsilan-Verbindungen in Gegenwart von elementarem Schwefel oder Schwefelwasserstoff zu hydrieren und so zu Mercaptosilanen zu gelangen. Es ergaben sich keine zufriedenstellenden Ausbeuten (US-PS 4 012 403).

Es ist bekannt, Mercaptosilane durch gezielte Spaltung von speziellen Thioethersilanen mit Hilfe von Friedel-Crafts-Katalysatoren herzustellen. Diese Verfahrensweise ist wegen der aufwendigen Herstellung der entsprechenden Vorprodukte wirtschaftlich nicht praktizierbar (DB-PS 23 40 886).

Es ist bekannt, Mercaptosilane durch Umsetzung der entsprechenden Halogenorganylsilan-Verbindungen mit Schwefelwasserstoff in Gegenwart von Ethylendiamin und großen Mengen an Schwermetallsulfiden herzustellen. Dieses Verfahren führt zur Bildung von diversen Nebenprodukten, die nur aufwendig vom Zielprodukt abzutrennen sind und die zu einem zweiphasigen Rohproduktsystem führen, dessen Aufarbeitung mit den in der DB-PS 33 46 910 beschriebenen Problemen belastet ist (siehe auch US-PS 3 849 471). Gewisse Verbesserungen gegenüber der in der US-PS 3 849 471 dargelegten Verfahrensweise werden erzielt, wenn die Umsetzung der Ausgangssilane mit Schwefelwasserstoff nicht in Gegenwart von Diaminen, sondern in Gegenwart von Ammoniak, primären, sekundären oder tertiären Aminen, gegebenenfalls zusätzlich in Gegenwart von polaren, protischen oder aprotischen Medien, vorgenommen wird (US-PS 4 082 790). Nachteilig bei dieser Verfahrensweise ist, daß zur Erreichung der für die Umsetzung der Reaktanten erforderlichen Reaktionstemperaturen die Reaktionen in Autoklaven durchgeführt werden müssen. Werden die Umsetzungen in Abwesenheit von polaren Medien vorgenommen, müssen zur Erzielung akzeptabler Umsatzraten unwirtschaftlich lange Reaktionszeiten in Kauf genommen werden. Aber auch der Zusatz von polaren Medien zum Reaktantengemisch bringt nur geringfügige Verkürzungen der Reaktionszeiten mit sich; jedoch treten wegen der gesteigerten Löslichkeit der als Reaktionsnebenprodukte anfallenden Hydrochloride alle die Schwierigkeiten auf, wie sie in der DE-PS 33 46 910 dargelegt werden und die nur durch entsprechende aufwendige Maßnahmen behoben werden könnten, was das Verfahren zusätzlich belastet.

Es ist weiterhin bekannt, Mercaptosilane durch Umsetzung von Schwefelwasserstoff mit ethylenisch ungesättigten Silanen unter Zuhilfenahme von UV-Licht oder in Gegenwart von Metallen der VIII. Nebengruppe des Periodischen Systems herzustellen. Das Verfahren führt zu geringen Ausbeuten an Zielprodukt. Die Reaktion ist von starken Nebenproduktbildungen gekennzeichnet (US-PS 3 890 312, DE-AS 10 00 817).

Weiterhin ist bekannt, die Umsetzung von Alkali-Hydrogensulfiden mit Halogenalkylsilanen in methanolischem Medium zu den entsprechenden Mercaptosilanen durchzuführen (GB-PS 1 102 251). Diese Verfahrensweise hat den Nachteil, daß zur Erzielung hoher Umsatzraten außergewöhnlich lange Reaktionszeiten erforderlich, und die dabei erhaltenen Ausbeuten unbefriedigend sind. Eine Verbesserung der Verfahrensweise bezüglich einer Verkürzung der Reaktionszeit und der Erhöhung der Ausbeute wird erreicht, wenn man die Reaktion unter gleichzeitiger Einleitung von Schwefelwasserstoff ablaufen läßt. Problematisch bleiben die Rohproduktaufarbeitung im Hinblick auf die Entfernung des bis zur Sättigung im Reaktionsgemisch gelösten Schwefelwasserstoffes und die bei der destillativen Aufarbeitung durch ständige Ausfällung von Alkalichloriden entstehenden Schwierigkeiten.

Es ist bekannt, diese Verfahrensweise durch den Einsatz von aprotischen, aber polaren Lösungsmitteln wie Dimethylformamid weiter zu verbessern (EP 0 471 164 Bl), wobei die Reaktionszeiten auf einige Stunden verkürzt und Ausbeuten von ca. 80% erzielt wurden. Nachteilig bei dieser Verfahrensweise sind der hohe energetische Aufwand beim Abtrennen der hochsiedenden Lösungsmittel und die notwendige destillative Reinigung des Produktes.

Es bestand deshalb die Aufgabe, Mercaptosilane so herzustellen, daß die Nachteile der bekannten Verfahrensweisen ausgeschlossen werden, das heißt, ein Verfahren zu finden, welches bei Einsatz preisgünstiger Rohstoffe unter technisch geringem Aufwand zu hohen Raum-Zeit-Ausbeuten führt und bei dem die Rohproduktaufarbeitung möglichst einfach gehalten werden kann und der Zwangsanfall an störenden Nebenprodukten minimiert werden kann.

Gegenstand der Erfindung ist ein Verfahren zur Herstellung von Silylalkylthiolen, welches dadurch gekennzeichnet ist, daß man Silylalkylsulfanylsilane mit Wasser zur Reaktion bringt. Diese Umsetzung erfolgt überraschenderweise innerhalb kurzer Reaktionszeiten schon bei Raumtemperatur quantitativ und erfolgt ohne die Bildung fester Nebenprodukte. Die als Nebenprodukt aus der S-Silyleinheit entstehenden Silanole lassen sich destillativ mit den als Lösungsvermittlern zwischen Wasser und Silan eingesetzten organischen Lösungsmitteln abtrennen und einer gesonderten Verwendung zuführen. Diese lassen sich zum Beispiel in der Siliconindustrie oder zur oberflächlichen Modifizierung von oxydischen Füllstoffen oder Gläsern verwenden.

Außerdem wurde ein überraschend einfaches Verfahren zur Herstellung der Vorstufe gefunden: Die entsprechenden Silylalkylsulfanylsilane können in hoher Ausbeute aus den technisch gut zugänglichen (DE 2542534, DE 2405758, DE 19541404, DE 19734295) Bis-silylalkyl-polysulfanen bzw. Bis-silylalkyldisulfanen durch Umsetzung mit Alkalimetall und Chlorsilanen hergestellt werden.

Das erfindungsgemäße Verfahren Herstellung von kann zur Herstellung von Silylalkylthiolen, die der allgemeinen Formel (I)

X¹X²X³Si-Alkyl(-SH)a (I)

entsprechend angewandt werden. Dabei gilt
- X¹X²X³: gleich Alkoxy, wie zum Beispiel Methoxy, Ethoxy, Propoxy
C₁ bis C₄-Alkyl
Aryl
Arylalkyl und Alkylaryl
sowie -Alkyl (-SH)ₐ
sind
und X¹X²X³ gleich oder verschieden sein können,
bevorzugt Ethoxy und Methoxy,
- Alkyl: gleich Alkyl mit C₁ bis C₁₆, auch verzweigt
Aryl
Arylalkyl und Alkylaryl
bevorzugt propyl
- a: eine ganze Zahl zwischen 1 und 3

Beispiele für Silylalkylthiole, die nach dem erfindungsgemäßen Verfahren hergestellt werden können, sind
3-Mercaptobutyltriethoxysilan
3-Mercaptopropyltriethoxysilan
3-Mercaptopropylmethyldimethoxysilan
2-Mercaptoethyltriethoxysilan
2-Mercaptoethylmethyldiethoxysilan
Mercaptomethyltrimethoxysilan
3-Mercaptopropyldimethylmethoxysilan

Das erfindungsgemäße Verfahren eignet sich auch zur Herstellung von Verbindungen, wie
p-Mercaptophenyltrimethoxysilan
p-(Mercaptomethyl)phenyltrimethoxysilan
2-(p-Mercaptophenyl-)ethyltrimethoxysilan
3-Mercaptopropylethyldimethoxysilan
3-Mercaptopropylphenyldimethoxysilan
3-Morcaptopropyl(2-phenylethyl)dimethoxysilan
2-Mercaptoethyldimethylmethoxysilan
3-Mercaptopropyltrimethylsilan
1,3-Dimercaptopropyltrimethoxysilan
2,4-Dimercaptobutylmethyldimethoxysilan
1,2-Dimercaptoethyltrimethoxysilan
2-(m,p-Dimercaptophenyl)ethyltrimethoxysilan
Mercaptomethyldimethylmethoxysilan
Mercaptopropyldimethylmethoxysilan
Mercaptomethyltrimethylsilan
Di(3-Morcaptopropyl)dimethoxysilan
3-Mercaptopropyl-2-mercaptoethyldimethoxysilan
1,2-Dimercaptoethyldimethylmethoxysilan
und andere mehr.

Ausgegangen wird nach dem erfindunqsgemäßen Verfahren von Silylalkylsulfanylsilanen der allgemeinen Formel (II),

X¹X²X³Si-Alkyl(-S-Si R¹R²R³)ₐ (II)

wobei
X¹X²X³, Alkyl und a dieselbe Bedeuten haben wie in Formel (I). Außerdem bedeuten
- R¹R²R³: gleich C₁ bis C₁₆-Alkyl, wie zum Beispiel Methyl, Ethyl, auch verzweigt
Alkoxy
Aryl
H
Halogen
X¹X²X³Si-Alkyl-S
sein kann, wobei R¹R²R³ gleich oder verschieden sein können, bevorzugt Methyl und X¹X²X³Si-Alkyl-S.

Beispiele für die erfindungsgemäßen Sulfanylsilane gemäß Formel (II) können sein:
(EtO)₃-Si-(CH₂)₃-S-Si(CH₃)₃
(EtO)₃-Si-(CH₂)₂-CH(CH₃)-S-Si(CH₃)₃
[(ETO)₃-Si-(CH₂)₃-S]₂Si(CH₃)₂
[(ETO)₃-Si-(CH₂)₃-S]₃Si(CH₃)
[(ETO)₃-Si-(CH₂)₃-S]₂Si(OEt)₂
[(ETO)₃-Si-(CH₂)₃-S]₄Si
(EtO)₃-Si-(CH₂)₃-S-Si(OEt)₃
(MeO)₃-Si-(CH₂)₃-S-Si(C₂H₅)₃
[(MeO)₃-Si-(CH₂)₃-S]₂Si(C₂H₅)₂
[(MeO)₃-Si-(CH₂)₃-S]₃Si(CH₃)
[(MeO)₃-Si-(CH₂)₃-S]₂Si(OMe)₂
[(MeO)₃-Si-(CH₂)₃-S]₄Si
(MeO)₃-Si-(CH₂)₃-S-Si(OMe)₃
(EtO)₃-Si-(CH₂)₂-CH(CH₃)-S-Si(CH₃)₃

Das erfindungsgemäße Verfahren zur Herstellung der Silylalkylthiole aus den entsprechenden Silylalkylsulfanylsilanen kann zweckmäßigerweise so durchgeführt werden, daß man das Sulfanylsilan gemäß Formel (II) mit Wasser in einem geeigneten Lösungsmittel, indem sich beide Komponenten lösen, umsetzt. Die eingesetzte Wassermenge kann dabei in weitem Bereich von der bezogen auf das Sulfanylsilan stöchiometrischen Menge bis zu 1000fachem molaren Überschuß variiert werden. Bevorzugt werden 10- bis 300fache molare Überschüsse an Wasser eingesetzt. Zur Beschleunigung der Reaktion können als wäßrige Komponente auch verdünnte wäßrige Säuren und Basen zum Einsatz kommen. Dabei können wäßrige Systeme mit einem pH-Wert zwischen 3 und 10, bevorzugt zwischen 5 und 8, besonders bevorzugt im neutralen Bereich eingesetzt werden. Als Lösungsmittel für die Reaktion können alle gängigen organischen inerten Lösungsmittel, in denen sich Wasser und die Silankomponente lösen, eingesetzt werden. Beispiele dafür können Lösungsmittel oder Gemischen davon, wie beispielsweise aromatischen Lösungsmittel wie Chlorbenzol, halogenierte Kohlenwasserstoffe, wie Chloroform, Methylenchlorid, Ether wie Diisopropylether, tert. Butylmethylether, Tetrahydrofuran, Dioxan oder Diethylether, Acetonitril oder Carbonsäureester, beispielsweise Essigsäureethylester, Essigsäuremethylester oder Essigsäureisopropylester, Alkohole, beispielsweise Methanol, Ethanol, n-Propanol, i-Propanol, n-Butanol, sec. Butanol oder tert. Butanol sein. Bevorzugte Lösungsmittel können dabei Ethanol, Diethylether oder Dioxan sein. Die Durchführung der Reaktion kann auch ohne zusätzliches Lösungsmittel durchgeführt werden, wenn gewährleistet ist, daß das Sulfanylsilan mit Wasser innig in Kontakt gebracht wird. Die Reaktion kann bei Temperaturen zwischen 0 und 200°C, bevorzugt bei 25°C bis 100°C durchgeführt werden. Die Reaktion kann außerdem unter Drücken zwischen 20 mbar und 20 bar, bevorzugt bei Normaldruck durchgeführt werden.

Die Herstellung der Silylalkylsulfanylsilane kann zweckmäßigerweise so durchgeführt werden, daß man Alkalimetall in einem geeigneten rührbaren Reaktionsgefäß vorlegt. Das Alkalimetall wird daraufhin mit einem geeigneten Aggregat zerkleinert und in einem geeigneten Lösungsmittel suspendiert. Als Alkalimetall kann Natrium und Kalium, bevorzugt Natrium eingesetzt werden. Als Lösungsmittel können alle inerten organischen Lösungsmittel, wie zum Beispiel Alkane, wie zum Beispiel Petrolether, Pentan, Hexan, Heptan oder aromatische Lösungsmittel, wie Benzol, Toluol, Xylol, sowie Ether, wie zum Beispiel Diethylether, Tetrahydrofuran und 1,4-Dioxan verwendet werden. Bevorzugt werden hochsiedende Alkane, wie zum Beispiel Heptan oder Toluol, verwendet. Die Zerkleinerung des Alkalimetalls kann mechanisch durch eine Presse oder einen schnellen Rührer oder rotierende Messer erfolgen. Auch ein thermisches Aufschmelzen des Alkalimetalls in dem verwendeten Lösungsmittel, wobei ebenfalls ein Rührer zu Hilfe genommen werden kann, kann erfolgen. Ebenfalls kann das Aufschmelzen des Alkalimetalls außerhalb der Reaktionsblase in einem gesonderten Gefäß erfolgen. Die eigentliche Reaktion kann dann derart durchgeführt werden, daß die Suspension des Alkalimetalls in dem Lösungsmittel auf die Reaktionstemperatur gebracht wird. Diese kann Werte von 20°C bis 200°C betragen. Bevorzugt kann bei der Siedetemperatur des eingesetzten Lösungsmittels gearbeitet werden. Dazu kann man nun schrittweise eine Mischung equimolarer Mengen des entsprechenden Bis-Silylalkylpolysulfans und des Chlorsilans geben. Nach beendeter Zugabe kann noch einige Stunden die Reaktionstemperatur gehalten werden, um die Reaktion zu vervollständigen. Danach kann abgekühlt werden und die Reaktionsmischung vom von entstandenem Alkalimetallchlorid und überschüssigem Alkalimetall und Schwefel abfiltriert werden. Das Lösungsmittel kann im Vakuum entfernt werden. Man kann das gewünschte Silylalkylsulfanylsilan in ca. 90-95%iger Ausbeute erhalten. Die Reaktion kann bei Temperaturen zwischen 20°C und 200°C, bevorzugt bei 50°C bis 120°C, durchgeführt werden. Die Reaktion kann außerdem unter Drücken zwischen 20 mbar und 20 bar bevorzugt bei Normaldruck, durchgeführt werden.

### Beispiel 1

In einem Glaskolben mit Magnetrührer, Rückflußkühler und Tropftrichter werden unter Schutzgasatmosphäre 1,8 g (78,3 mmol) Natrium in 120 ml n-Hexan mechanisch zerkleinert. Die Mischung wird unter Rühren zum Sieden erhitzt. Dazu tropft man innerhalb 15 min eine Lösung von 16,62 g (35,0 mmol) Bis-(triethoxysilylpropyl)disulfan und 8,41 g (77,5 mmol) Chlortrimethylsilan in 60 ml n-Hexan. Man läßt die Mischung noch 5 h am Rückfluß sieden, kühlt ab und filtriert vom ausgefallenen Feststoff und überschüßigem Natrium ab. Das Lösungsmittel wird im Vakuum abdestilliert und man erhält 20,43 g (94% d.Th.) einer klaren, leicht gelblichen Flüssigkeit, welche nach gaschromatographischer Analyse zu 88,3% das gewünschte Triethoxysilylpropylsulfanyltrimethylsilan enthält. Die sonstigen analytischen Daten (NMR) stimmen mit den über das Produkt bekannten Daten überein.

### Beispiel 2

Analog zu Beispiel 1, mit den Unterschieden, daß zunächst 25,0 g (1,08 mol) Natrium in 300 ml Toluol zerkleinert werden. Dazu gibt man eine Lösung von 237,42 g (0,50 mol) Bis-(triethoxysilylpropyl)disulfan und 120,0 g (1,10 mol) Chlortrimethylsilan in 150 ml Toluol. Die Reaktionszeit beträgt in diesem Fall 4 h. Man erhält 228,6 g (74 % d.Th.) einer gelblichen Flüssigkeit, welche nach gaschromatographischer Analyse zu 83,1% das gewünschte Triethoxysilylpropylsulfanyltrimethylsilan enthält. Die sonstigen analytischen Daten (NMR) stimmen mit den über das Produkt bekannten Daten überein.

### Beispiel 3

In einem einfachen Glaskolben mit Rückflußkühler werden unter Rühren 2,5 g (8,05 mmol) Triethoxysilylpropylsulfanyltrimethylsilan zusammen mit 0,5 ml (27,7 mmol) Wasser und 10 ml Ethanol 3 h zum Sieden erhitzt. Nach Abdestillieren des Lösungsmittels und der leichtsiedenden Reaktionsprodukte und des überschüssigen Wassers verbleiben im Kolben 1,9 g (99% d. Th.) einer farblosen Flüssigkeit, die gaschromatographisch und per NMR als Triethoxysilylpropylmercaptan analysiert wird.

### Beispiel 4

Analog zu Beispiel 3, mit dem Unterschied, daß statt Ethanol Dioxan benutzt wird. Hier wird bereits nach 30 min. Reaktionszeit vollständiger Umsatz zum Triethoxysilylpropylmercaptan erzielt, welches gaschromatographisch nachgewiesen wird.

## Patentansprüche

1. Verfahren zur Herstellung von Silylalkylthiolen, dadurch gekennzeichnet, daß man Silylalkylsulfanylsilane mit Wasser zur Reaktion bringt.

2. Verfahren nach Anspruch 1, dadurch gekennzeichnet, daß man die Silylalkylsulfanylsilane herstellt, indem man Bis-silylalkyl-polysulfane beziehungsweise Bis-silylalkyldisulfane mit Alkalimetall und Chlorsilane umsetzt.
